# DEMANDE DE BREVET EUROPEEN

(11) **EP 0 959 605 A1**
(43) Date de publication de la demande: **24.11.1999**
(21) Numéro de dépôt: 99201464.7
(22) Date de dépôt: 10.05.1999
(51) Int. Cl.: H04M 1/72

(54) **Combiné téléphonique et appareil téléphonique pour faciliter l'accès aux dispositifs répondeurs**

(30) Priorité: 19.05.1998 FR 9806310
(71) Demandeur: Koninklijke Philips Electronics N.V., 5621 BA Eindhoven (NL)
(72) Inventeur: Vitel, Sandrine, 75008 Paris (FR); Coupigny, Jean-Paul, 75008 Paris (FR)
(74) Mandataire: Chaffraix, Jean

(57) **Abrégé**

Système téléphonique dans lequel les combinés téléphoniques (HS1,HS2,HS3) répondant à la norme DECT peuvent se raccorder soit à une base (2) rattachée à un central téléphonique public (3), soit directement à ce central (3) par voie hertzienne.

La base et le central ont chacun une boîte vocale. Pour y accéder, on a prévu sur ces combinés, un bouton qui permet de consulter les boîtes vocales situées dans ladite base (boîte 30) ou dans ledit central téléphonique (boîte 55).

## Description

La présente invention concerne un système téléphonique comportant :
- au moins un combiné téléphonique,
   - au moins un premier dispositif répondeur.

L'invention concerne aussi un appareil et un combiné convenant à un tel système.

Les systèmes téléphoniques sont de plus en plus munis de dispositifs répondeurs offrant plus ou moins la fonction de boîte vocale.

On pourra à ce sujet se reporter au document de brevet japonais portant la référence N^{o}06291831 A

Un problème qui se pose avec ce genre de système est que l'utilisateur a à consulter tous les dispositifs répondeurs qu'il a à sa disposition, ce qui peut être fastidieux et impliquer des procédures différentes dont il faut se souvenir.

La présente invention propose un système du genre mentionné dans le préambule dans lequel on a prévu des moyens pour faciliter l'accès de l'utilisateur à ses dispositifs répondeurs.

Pour cela, un tel appareil est remarquable en ce que les combinés comportent un moyen de commande pour déclencher, lors de son activation, l'accès à au moins un des dispositifs répondeurs.

L'idée de l'invention est de faciliter l'utilisation du système, en permettant à l'utilisateur de consulter ses dispositifs répondeurs par des commandes immédiates, constituées, par exemple, par un simple appui sur une touche.

La description suivante, faite en regard des dessins ci-annexés, le tout donné à titre d'exemple non limitatif, fera bien comprendre comment l'invention peut être réalisée.
La figure 1 montre un système conforme à l'invention.
La figure 2 montre un schéma explicatif du fonctionnement du système de l'invention.

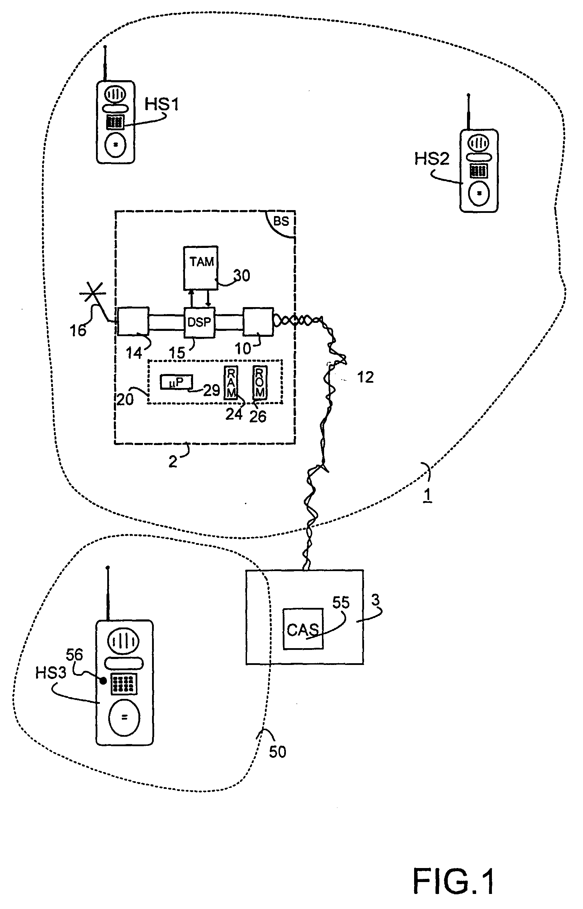

A la figure 1, le système qui est représenté est formé par un appareil 1 répondant aux normes DECT. On trouvera, dans la norme ETSI ETS 300 175-5 part 5 : "Couche réseau", différentes informations concernant ce genre d'appareil. La référence 2 montre la station de base BS à laquelle peuvent être rattachés, par voie radioélectrique, une pluralité de combinés, dans cet exemple deux combinés HS1 et HS2. Cette station de base 2 comporte, entre autres, un circuit de ligne 10 qui lui permet d'être raccordée à un central de commutation 3 donnant accès au réseau commuté via une ligne téléphonique 12 et un circuit radioélectrique 14 qui autorise le dialogue avec les différents combinés HS1, HS2, en émettant et en recevant des ondes par l'intermédiaire d'une antenne 16. Pour traiter toutes les informations de nature analogique qui transitent à l'intérieur de la station 2, il est prévu un organe de traitement de signal 15 formé autour d'un processeur de signal DSP qui traite les signaux vocaux notamment. Tous les éléments de la station de base sont gérés par un ensemble à microprocesseur 20. Cet organe 20 est composé, notamment, de la façon usuelle, d'une mémoire vive 24, d'une mémoire morte 26 contenant les instructions de fonctionnement de l'appareil et d'un processeur de gestion 29. Cet appareil comporte aussi un dispositif répondeur constitué essentiellement par une mémoire 30 d'un type connu sous le nom de mémoire flash. Cette mémoire est donc destinée à contenir les messages nécessités par la fonction répondeur. Cette fonction implique donc aussi la fonction de boîte vocale.

Le combiné HS3 se trouve dans une zone 50 de propagation radioélectrique qui lui permet de se raccorder directement au réseau commuté va le central de commutation 3. Mais ce combiné peut aussi se relier à la station de base précitée. On pourra à ce sujet consulter les normes DECT ETS 300 824 mentionnant la définition du CAP (Access Profile) permettant ce service.

Il convient, aussi, de mentionner que les fournisseurs d'accès téléphoniques installent de plus en plus souvent des dispositifs répondeurs dans leurs centraux téléphoniques. Le central 3, qui appartient à cette sorte de fournisseur comporte un tel dispositif portant la référence 55.

Selon l'invention, pour commander la relation vers le dispositif répondeur, il est prévu une commande 56 sur les combinés. Ceci est seulement montré pour le combiné HS3, les autres combinés pouvant avoir aussi cette commande.

Ainsi, par un appui de cette touche pendant une seconde, par exemple, du combiné HS3, on obtiendra un accès à sa boîte vocale contenue dans le dispositif répondeur 55.

Le statut des combinés HS1 et HS2 est différent de celui du combiné HS3. Si on effectue un appui de la même durée d'une seconde, on obtient également l'accès à cette boîte vocale 55. Mais si cet appui est prolongé alors on obtient un accès à la boîte vocale contenue dans la base 2.

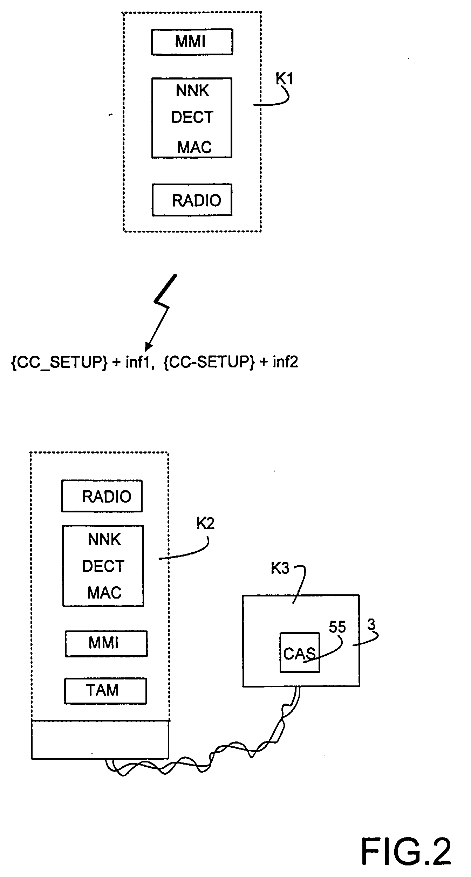

La figure 2 explicite le fonctionnement du système de l'invention. La case K1 sur cette figure est relative au fonctionnement du combiné HS1, par exemple. L'appui sur la touche est traité par la couche MMI et va, au travers des différentes couches de protocoles, établir un lien en lançant la procédure {CC-SETUP} telle que décrite dans la norme DECT ETS 300 175-5 au paragraphe 9.3. A cette procédure on adjoint une information 〈〈 inf1 〉〉 ou 〈〈 inf2 〉〉 qui indique le travail à effectuer par la base BS, c'est-à-dire si l'on doit se connecter sur la boîte vocale locale TAM ou sur la boîte vocale du commutateur public CAS 55.

La case K2 est relative, elle, à la station de base 2 recevant ce {CC-SETUP} et examine le message. C'est alors soit une connexion sur la boîte vocale locale qui est effectuée, soit une connexion vers la boîte lointaine du réseau public (case K3).

## Revendications

1. Système téléphonique comportant :
- au moins un combiné téléphonique,
- au moins un premier dispositif répondeur,
caractérisé en ce qu'il est prévu au niveau du combiné :
- un moyen de commande pour déclencher, lors de son activation, l'accès à au moins un des dispositifs répondeurs.

2. Système téléphonique selon la revendication 1, caractérisé en ce que ledit moyen de commande est constitué par une touche ménagée sur le combiné.

3. Système téléphonique selon la revendication 1 ou 2, caractérisé en ce que, pour effectuer une première relation avec un premier dispositif répondeur, l'activation est obtenue par l'appui durant un premier laps de temps sur ladite touche.

4. Système téléphonique selon la revendication 1 ou 2, caractérisé en ce que, pour effectuer une première relation avec un premier dispositif répondeur, l'activation est obtenue par l'appui durant un premier laps de temps sur ladite touche et pour effectuer une deuxième relation avec un deuxième dispositif répondeur, l'activation est obtenue par l'appui durant un deuxième laps de temps sur ladite touche.

5. Appareil téléphonique convenant à un système selon l'une des revendications 2 ou 3, caractérisé en ce qu'il comporte :
- une station de base raccordée à un réseau téléphonique dans lequel est prévu un dispositif répondeur,
- un premier dispositif répondeur placé dans cette station de base,
- au moins un combiné téléphonique muni dudit moyen de commande.

6. Combiné téléphonique convenant à un système selon l'une des revendications 2 ou 3, caractérisé en ce qu'il comporte un moyen de commande pour déclencher, lors de son activation, l'accès à au moins un des dispositifs répondeurs.
